# EUROPÄISCHE PATENTSCHRIFT

(11) **EP 0 923 237 B1**
(45) Veröffentlichungstag und Bekanntmachung des Hinweises auf die Patenterteilung: **18.02.2004**
(21) Anmeldenummer: 98123198.8
(22) Anmeldetag: 05.12.1998
(51) Int. Cl.: H04N 5/66, H05K 7/20, H04N 5/74

(54) **Vorrichtung zur Kühlung eines Displays**
Device for cooling a display apparatus
Dispositif pour le refroidissement d'un dispositif d'affichage

(30) Priorität: 10.12.1997 DE 19754804
(43) Veröffentlichungstag der Anmeldung: 16.06.1999
(73) Patentinhaber: GRUNDIG Aktiengesellschaft, 90471 Nürnberg (DE)
(72) Erfinder: Fischbeck, Udo, 90762 Fürth (DE)

(56) Entgegenhaltungen:
- EP-A- 0 686 991
- US-A- 5 136 397
- US-A- 5 252 955
- US-A- 5 584 554
- PATENT ABSTRACTS OF JAPAN vol. 17, no. 29 (P-1472), 20. Januar 1993 & JP 04 250491 A (MATSUSHITA ELECTRIC WORKS LTD), 7. September 1992
- PATENT ABSTRACTS OF JAPAN vol. 96, no. 9, 30. September 1996 & JP 08 138534 A (FUJITSU LTD), 31. Mai 1996
- PATENT ABSTRACTS OF JAPAN vol. 96, no. 8, 30. August 1996 & JP 08 098121 A (MITSUBISHI ELECTRIC CORP), 12. April 1996
- PATENT ABSTRACTS OF JAPAN vol. 16, no. 430 (P-1417), 9. September 1992 & JP 04 147291 A (MATSUSHITA ELECTRIC IND CO), 20. Mai 1992
- PATENT ABSTRACTS OF JAPAN vol. 98, no. 3, 27. Februar 1998 & JP 09 307257 A (FUJITSU GENERAL LTD), 28. November 1997

## Beschreibung

Die Erfindung betrifft eine Vorrichtung zur Kühlung eines Displays, mit einem Ventilator zur Erzeugung einer das Display kühlenden Luftströmung, einem Temperaturfühler zur Erfassung der im Bereich des Displays herrschenden Temperatur und einer ausgangsseitig mit dem Temperaturfühler verbundenen Steuersignalerzeugungseinheit zur Erzeugung eines Steuersignals für den Ventilator.

Aus der Zeitschrift RFE, Heft 2, 1997, Seiten 18 - 20, sind bereits die grundsätzliche Funktionsweise und die wesentlichen Eigenschaften eines von der Anmelderin entwickelten Fernsehgerätes mit einem Plasmadisplay bekannt. Ein Nachteil derartiger Plasmadisplays ist deren vergleichsweise hohe Leistungsaufnahme, aufgrund derer Maßnahmen notwendig sind, die zu einer Abkühlung des Displays führen.

In diesem Zusammenhang ist es bereits aus der JP -A-0 425 0491 bekannt, im Bereich des Plasmadisplays einen Temperaturfühler vorzusehen, mittels dessen die im Bereich des Displays herrschende Temperatur erfaßt wird. Überschreitet diese Temperatur einen vorgegebenen Temperatur-Schwellwert, dann wird ein Steuersignal für einen Ventilator erzeugt, mittels dessen eine das Display kühlende Luftströmung erzeugt wird.

Ein Nachteil dieser Vorgehensweise besteht darin, daß die die Abkühlung hervorrufende Luftströmung erst dann erzeugt wird, wenn die gemessene Temperatur im Bereich des Displays schon vergleichsweise hoch ist. Dies führt bei einem Betrieb des Displays über einen langen Zeitraum dazu, daß die der Wärme ausgesetzten Bauteile schneller als nötig altern. Diese Alterung wiederum führt zu häufigeren Ausfällen von Bauteilen bzw. zu Gerätedefekten.

Weiterhin ist es aus der JP-A-0 813 8534 bekannt, einen Ventilator in Abhängigkeit von der an einem Bildschirm anliegenden horizontalen Abtastfrequenz zu steuern. Dazu wird aus dem Videosignal die horizontale Abtastfrequenz ermittelt, wobei dann in Abhängigkeit davon eine Ansteuerung des Ventilatormotors erfolgt.

Ausgehend von diesem Stand der Technik liegt der Erfindung die Aufgabe zugrunde, eine Vorrichtung zur Kühlung eines Displays mit den im Oberbegriff des Anspruchs 1 angegebenen Merkmalen derart weiterzubilden, daß die vorstehend beschriebenen Nachteile vermieden werden.

Diese Aufgabe wird bei einer Vorrichtung mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung ergeben sich aus den abhängigen Ansprüchen.

Die Vorteile der Erfindung bestehen insbesondere darin, daß die Vorrichtung zur Kühlung schnell anspricht, so daß sich das Display im Vergleich zum Stand der Technik langsamer aufheizt. Folglich sind auch die das Display umgebenden Bauteile weniger lange hohen Temperaturen ausgesetzt, was bei einem Gebrauch über einen langen Zeitraum die Lebensdauer dieser Bauteile erhöht. Dazu trägt auch bei, daß die genannten Bauteile geringeren Temperaturschwankungen ausgesetzt sind. Weitere Vorteile der Erfindung ergeben sich aus der beispielhaften Erläuterung der Erfindung anhand der Figuren.

Es zeigt:
- FIG 1: ein Ausführungsbeispiel für eine erfindungsgemäße Vorrichtung zur Kühlung eines Displays,
- FIG 2: Diagramme zur Veranschaulichung der Arbeitsweise bekannter Vorrichtungen zur Kühlung eines Displays, und
- FIG 3: Diagramme zur Veranschaulichung der Arbeitsweise einer erfindungsgemäßen Vorrichtung zur Kühlung eines Displays.

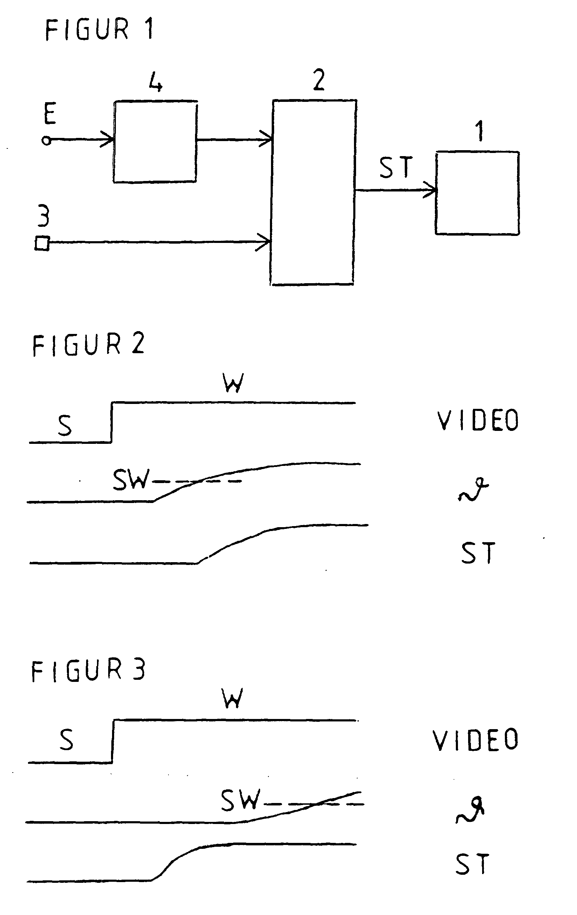

Die Figur 1 zeigt ein Ausführungsbeispiel für eine erfindungsgemäße Vorrichtung zur Kühlung eines Displays. Die gezeigte Vorrichtung weist einen Eingang E auf, über welchen der Vorrichtung ein Videosignal zugeführt wird. Dieses Videosignal ist aus dem Videosignalweg eines Fernsehempfängers abgeleitet, welcher mit einem Plasmadisplay versehen ist, auf dem dem Videosignal entsprechende Bilder dargestellt werden. Derartige Plasmadisplays haben eine hohe Leistungsaufnahme, aufgrund derer Maßnahmen zur Kühlung des Displays notwendig sind.

Diese Kühlung erfolgt unter Verwendung eines Ventilators 1, der zur Erzeugung einer das Display kühlenden Luftströmung vorgesehen ist. Der Ventilator 1 wird von einer Steuersignalerzeugungseinheit 2 mit einem Steuersignal ST beaufschlagt, welches in Abhängigkeit von der im Bereich des Displays herrschenden Temperatur den Ventilator aktiviert und dessen Drehzahl beeinflußt. Die im Bereich des Displays herrschende Temperatur wird von einem Meßkopf bzw. Temperaturfühler 3 erfaßt, der ausgangsseitig mit der Steuersignalerzeugungseinheit 2 verbunden ist und dieser ein Signal zuführt, welches die genannte Temperatur charakterisiert. In der Steuersignalerzeugungseinheit 2 wird dieses Signal mit einem vorgegebenen Temperaturschwellenwert verglichen, der beispielsweise 40° betragen kann. Übersteigt das Signal den genannten Schwellenwert, dann erzeugt die Steuersignalerzeugungseinheit, die z. B. von einem Mikrocomputer realisiert ist, ein Steuersignal, mittels dessen der Ventilator 1 aktiviert und in bezug auf seine Drehzahl gesteuert wird. Je höher die Temperatur des Displays steigt, desto höher wird die Drehzahl des Ventilators eingestellt.

Weiterhin erfolgt die Generierung des Steuersignals für den Ventilator 1 in der Steuersignalerzeugungseinheit 2 auch in Abhängigkeit vom Inhalt des auf dem Plasmadisplay dargestellten Videosignals. Zu diesem Zweck wird das am Eingang E anliegende Videosignal über einen Integrator 4 der Steuersignalerzeugungseinheit 2 zugeführt.

Im Integrator 4 erfolgt eine Auswertung des dem Display zugeführten Videosignals im Hinblick auf die darin enthaltenen Hell- und Dunkelanteile. Weist das Videosignal einen hohen Bestandteil an hellen Signalinhalten auf, dann würde dies ohne entsprechende Gegenmaßnahmen zu einer schnellen Erhöhung der im Bereich des Displays herrschenden Temperatur führen. Um dies zu vermeiden, wird das Videosignal im Integrator 4 über eine vorgegebene Zeitdauer integriert. Diese vorgegebene Zeitdauer kann z. B. 20 ms betragen, welche Zeitdauer bei einem Plasmadisplay einer Vollbildperiode des Videosignals entspricht.

Das Ausgangssignal des Integrators 4 wird in der Steuersignalerzeugungseinheit 2 mit einem vorgegebenen weiteren Schwellenwert verglichen. Ergibt eine derartige Auswertung des Videoinhaltes über einen Zeitintervall von beispielsweise 10 Sekunden, daß das Ausgangssignal des Integrators 4 den vorgegebenen weiteren Schwellenwert in mehr als z. B. 90% der Fälle übersteigt, dann erzeugt die Steuersignalerzeugungseinheit 2 unabhängig vom Ausgangssignal des Temperaturfühlers 3 ein Steuersignal für den Ventilator 1. Aufgrund dieses Steuersignals wird der Ventilator 1 aktiviert und in bezug auf seine Drehzahl gesteuert, so daß eine das Display stärker kühlende Luftströmung erzeugt wird.

Der Vorteil der Berücksichtigung des Inhalts des Videosignals bei der Erzeugung des Steuersignals für den Ventilator 1 besteht insbesondere darin, daß die Erzeugung einer das Display kühlenden Luftströmung bereits in die Wege geleitet wird, bevor die im Bereich des Displays herrschende Temperatur einen kritischen Wert erreicht. Dies hat zur Folge, daß die Zeitdauer, für die im Bereich des Displays hohe Temperaturen vorliegen, reduziert ist. Dies führt insbesondere bei einem langjährigen Gebrauch des das Plasmadisplay aufweisenden Fernsehgerätes zu einer verlängerten Lebensdauer des Displays und der in dessen Nähe angeordneten Bauteile.

Folglich fallen für den Benutzer auch weniger Reparaturkosten an.

Ergibt die beschriebene Auswertung des Videoinhaltes und die genannte Temperaturmessung, daß beide oben angegebene Schwellenwerte übertroffen werden, dann erfolgt die Erzeugung des Steuersignals für den Ventilator 1 sowohl in Abhängigkeit des Ausgangssignals des Integrators 4 als auch des Ausgangssignals des Temperaturfühlers 3.

Im folgenden wird die Arbeitsweise einer erfindungsgemäßen Vorrichtung zur Kühlung eines Displays anhand der Figuren 2 und 3 mit der Arbeitsweise bekannter Vorrichtungen verglichen.

Die Figur 2 zeigt Diagramme zur Veranschaulichung der Arbeitsweise bekannter Vorrichtungen zur Kühlung eines Displays. In der oberen Darstellung von Figur 2 ist der Verlauf eines auf dem Display dargestellten Videosignals gezeigt, wobei das Videosignal einen Schwarz-Weiß-Übergang aufweist. In der mittleren Darstellung ist der gemessene Verlauf der im Bereich des Displays herrschenden Temperatur aufgezeigt. Es ist ersichtlich, daß sich die gemessene Temperatur nach dem Auftreten des Schwarz-Weiß-Überganges ausgehend von einem Grundtemperaturwert stetig erhöht. Erreicht die gemessene Temperatur den vorgegebenen Temperatur-Schwellenwert SW, dann wird - wie aus der unteren Darstellung von Figur 2 hervorgeht - das Steuersignal ST für den Ventilator 1 erzeugt, aufgrund dessen der Ventilator die zur kräftigeren Kühlung des Displays vorgesehene Luftströmung erzeugt.

Die Figur 3 zeigt Diagramme zur Veranschaulichung der Arbeitsweise einer erfindungsgemäßen Vorrichtung zur Kühlung eines Displays. In der oberen Darstellung von Figur 3 ist der Verlauf eines auf dem Display dargestellten Videosignals gezeigt, wobei das Videosignal einen Schwarz-Weiß-Übergang aufweist. In der unteren Darstellung ist der Verlauf des Steuersignals ST für den Ventilator gezeigt, welches durch die oben beschriebene Auswertung des Videoinhaltes erzeugt wurde. Durch einen Vergleich mit der in Figur 2 gezeigten Darstellung des Steuersignals ST für den Ventilator ergibt sich, daß das in Figur 3 dargestellte Steuersignal ST zu einem früheren Zeitpunkt erzeugt wird. Dies hat zur Folge, daß sich die im Bereich des Displays gemessene Temperatur erst zu einem späteren Zeitpunkt ausgehend vom Grundtemperaturwert erhöht. Dadurch wird auch der Temperatur-Schwellenwert SW erst zu einem späteren Zeitpunkt erreicht. Dieser Verlauf der im Bereich des Displays herrschenden Temperatur ist in der mittleren Darstellung der Figur 3 gezeigt. Gegebenenfalls bewirkt die bereits zu einem früheren Zeitpunkt in die Wege geleitete Kühlung auch, daß der genannte Schwellenwert gar nicht erreicht wird.

Vorstehend wurde die Erfindung am Ausführungsbeispiel eines Plasmadisplays erläutert. Sie ist aber - wie aus der obigen Beschreibung ohne weiteres ersichtlich - auch bei allen anderen Displays anwendbar, die einer Kühlung bedürfen, beispielsweise bei einem DMD (Digital Mirror Device).

## Patentansprüche

1. Vorrichtung zur Kühlung eines Displays,
- mit einem Ventilator (1) zur Erzeugung einer das Display kühlenden Luftströmung,
- einer Steuersignalerzeugungseinheit (2) zur Erzeugung eines Steuersignals (ST) für den Ventilator,
- einem Temperaturfühler (3) zur Erfassung der im Bereich des Displays herrschenden Temperatur,
wobei die Steuersignalerzeugungseinheit (2) in Abhängigkeit von der vom Temperaturfühler (3) erfassten Temperatur ein Steuersignal (ST) erzeugt und damit den Ventilator (1) ansteuert, derart, dass dieser abhängig von der mittels des Temperaturfühlers (3) erfassten Temperatur eine das Display kühlende Luftströmung erzeugt, und dass weiterhin
- eine Schaltung (4) zur Auswertung des dem Display zugeführten Videosignals hinsichtlich seiner Hell- und Dunkelanteile vorgesehen ist,
- die Schaltung (4) zur Auswertung des dem Display zugeführten Videosignals ausgangsseitig mit der Steuersignalerzeugungseinheit (2) verbunden ist, und
- die Steuersignalerzeugungseinheit (2) einen Komparator aufweist, welcher zum Vergleichen des von der Schaltung (4) gelieferten Signal mit einem Schwellenwert vorgesehen ist,
- die Steuersignalerzeugungseinheit (2) ein vom Ausgangssignal der Schaltung (4) beeinflusstes Steuersignal (ST) für den Ventilator (1) erzeugt, wenn das von der Schaltung (4) gelieferte Signal bei hellen Bildinhalten den Schwellenwert übersteigt.

2. Vorrichtung nach Anspruch 1,
**dadurch gekennzeichnet,**
**dass** die Schaltung (4) zur Auswertung des dem Display zugeführten Videosignals ein Integrator ist.

3. Vorrichtung nach Anspruch 2,
**dadurch gekennzeichnet,**
**dass** der Integrator zur Integration des Videosignals über die Dauer einer Vollbildperiode vorgesehen ist.

4. Vorrichtung einem der vorhergehenden Ansprüche,
**dadurch gekennzeichnet,**
**dass** die Steuersignalerzeugungseinheit (2) ein Steuersignal (ST) für den Ventilator (1) erzeugt, welches ausschließlich vom Ausgangssignal der Schaltung (4) beeinflusst ist.

5. Vorrichtung einem der vorhergehenden Ansprüche,
**dadurch gekennzeichnet,**
**dass** die Steuersignalerzeugungseinheit (2) ein Steuersignal (ST) für den Ventilator (1) erzeugt, welches sowohl vom Ausgangssignal der Schaltung (4) als auch vom Ausgangssignal des Temperaturfühlers (3) beeinflusst ist.

6. Vorrichtung einem der vorhergehenden Ansprüche,
**dadurch gekennzeichnet,**
**dass** das Display ein Plasmadisplay ist.

## Claims

1. Device for cooling a display
- comprising a fan (1) for generating an air flow that cools the display,
- a control-signal-generating unit (2) for generating a control signal (ST) for the fan,
- a temperature sensor (3) for determining the temperature prevailing in the region of the display,
wherein the control-signal-generating unit (2) generates a control signal (ST) as a function of the temperature determined by the temperature sensor (3) and activates the fan (1) therewith in such a way that the latter generates an air flow that cools the display depending on the temperature determined by means of the temperature sensor (3), and wherein, furthermore,
- a circuit (4) is provided for evaluating the video signal routed to the display with respect to its bright and dark components,
- the output of the circuit (4) for evaluating the video signal routed to the display is connected to the control-signal-generating unit (2), and
- the control-signal-generating unit (2) has a comparator that is provided for comparing the signal supplied by the circuit (4) with a threshold value,
- the control-signal-generating unit (2) generates a control signal (ST) for the fan (1) that is influenced by the output signal of the circuit (4) if the signal supplied by the circuit (4) exceeds the threshold value in the case of bright picture contents.

2. Device according to Claim 1, **characterized in that** the circuit (4) for evaluating the video signal routed to the display is an integrator.

3. Device according to Claim 2, **characterized in that** the integrator is provided for integrating the video signal over the duration of a frame period.

4. Device according to any one of the preceding claims, **characterized in that** the control-signal-generating unit (2) generates a control signal (ST) for the fan (1) that is influenced exclusively by the output signal of the circuit (4).

5. Device according to any one of the preceding claims, **characterized in that** the control-signal-generating unit (2) generates a control signal (ST) for the fan (1) that is influenced both by the output signal of the circuit (4) and by the output signal of the temperature sensor (3).

6. Device according to any one of the preceding claims, **characterized in that** the display is a plasma display.

## Revendications

1. Dispositif pour refroidir un dispositif d'affichage, comportant
- un ventilateur (1) pour produire un courant d'air refroidissant le dispositif d'affichage,
- une unité (2) de production de signal de commande pour produire un signal de commande (ST) pour le ventilateur,
- un capteur de température (3) pour détecter la température qui règne dans la zone du dispositif d'affichage,
dans lequel l'unité (2) de production de signal de commande produit un signal de commande (ST) en fonction de la température détectée par le capteur de température (3) et commande par conséquent le ventilateur de telle sorte que ce dernier produit un courant d'air refroidissant le dispositif d'affichage, en fonction de la température détectée au moyen du capteur de température (3), et il est prévu en outre
- un circuit (4) pour évaluer le signal vidéo envoyé au dispositif d'affichage, en ce qui concerne ses composantes lumineuse et sombre,
- le circuit (4) d'évaluation du signal vidéo envoyé au dispositif d'affichage est relié côté sortie à l'unité (2) de production de signal de commande, et
- l'unité (2) de production de signal de commande comporte un comparateur, qui est destiné à comparer le signal délivré par le circuit (4) à une valeur de seuil,
- l'unité (2) de production de signal de commande produit un signal de commande (ST), influencé par le signal de sortie (4), pour le ventilateur (1) lorsque le signal délivré par le circuit (4) dépasse la valeur de seuil dans le cas de contenus lumineux de l'image.

2. Dispositif selon la revendication 1, **caractérisé en ce que** le circuit (4) d'évaluation du signal vidéo envoyé au dispositif d'affichage est un intégrateur.

3. Dispositif selon la revendication 2, **caractérisé en ce que** l'intégrateur est prévu pour l'intégration du signal vidéo pendant la durée d'une période d'image complète.

4. Dispositif selon l'une des revendications précédentes, **caractérisé en ce que** l'unité (2) de production de signal de commande produit un signal de commande (ST) pour le ventilateur (1), qui est influencé exclusivement par le signal de sortie du circuit (4).

5. Dispositif selon l'une des revendications précédentes, **caractérisé en ce que** l'unité (2) de production de signal de commande produit un signal de commande (ST) pour le ventilateur (1), qui est influencé aussi bien par le signal de sortie du circuit (4) que par le signal de sortie du capteur de température (3).

6. Dispositif selon l'une des revendications précédentes, **caractérisé en ce que** le dispositif d'affichage est un dispositif d'affichage à plasma.
